# EUROPEAN PATENT APPLICATION

(11) **EP 1 411 319 A1**
(43) Date of publication of application: **21.04.2004**
(21) Application number: 02023020.7
(22) Date of filing: 15.10.2002
(51) Int. Cl.: G01B 3/10, B32B 15/08

(54) **A structure of a measuring tape covered with polyester membrane thereon and the manufacturing method thereof**

(71) Applicant: Li, Shin-Lin, Taipei (TW)
(72) Inventor: Li, Shin-Lin, Taipei (TW)
(74) Representative: Viering, Jentschura & Partner

(57) **Abstract**

A structure of a measuring tape covered with polyester membrane thereon and the manufacturing method thereof are disclosed. The structure is composed of a thin measuring tape (10), a primer and a polyester membrane both formed on each tape surface. Both tape surfaces are brilliantly colored by coating with the primer thereon, then scale marks are printed thereon by a printing roller (25). Finally a 15µm thick polyester membrane (30) is formed on each tape surface by applying a thermal pressing force utilizing a pair of temperature rollers (36,38) at constant temperature of 150°C so as to offer the tape an anti-abrasive proprety and also ensure durability of the scale marks without exfoliating. The advantages of the present invention over the conventional technique are: falt and smooth tape surface, excellent anti-abrasive proprety and improved durability, good color matching between the primer and the scale marks thereby facilitating reading scale, and easy manufacturing with improved production efficiency and reduced product cost.

## Description

### BACKGROUND OF THE INVENTION

### 1. Field of the invention

The present invention relates to structure of measuring tape covered with polyester membrane thereon and the manufacturing method thereof, and more particularly, relates to the measuring tape mentioned above with enhanced anti-abrasive property, appreciably flat and smooth surface, able to be easily manufactured with low cost.

### 2. Description of the Prior Art

A measuring tape of a type rule is manufactured of a whole roll of thin tape through the steps of surface painting, printing scale marks thereon, irradiating light ray and drying. The friction resistant treatment for a conventional tape is generally performed after finishing the steps of printing scale marks and irradiating light ray. Here, the process of friction resistant treatment is accomplished b coating a layer of a transparent enamel paint on the surface of a tape for obtaining good appearance and enhancing anti-abrasive effect. However, there is a problem that a tape rule is frequently used, by drawing out and recoiling the tape hundreds of times, the tape will be abrased severely by frequent and forcible slide contact with the outlet edge of the ape on a tape rule. As a result, partial portion of a tape will be so worn out that the reading of scale marks thereof becomes vague whereby degrading measuring accuracy shortly afterwards. Anti-abrasive surface treatment for a conventional tape is incomplete!

Incidentally, manufacturers of tape rules soon discovered the fact that the anti-abrasive property of a tape will be improved to lengthen its life by coating a thin film on the tape surface, the usable materials include resin, fiber glass and nylon etc. But it is regretful that they discovered before long that no expected effect was obtained by using those materials. After a long time trials they discovered this time that applying polyester thin film coating on the tape surface might provide a far excellent anti-abrasive property for a tape than that provided by preciously used materials.

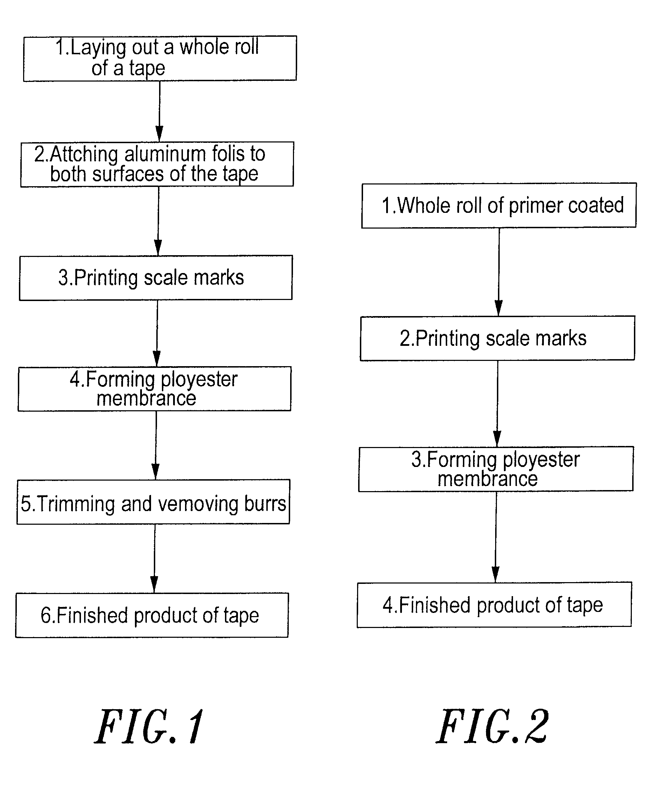

Polyester membrane has an excellent anti-corrosive property against acid and alkali, and moreover, is strongly resistant to grease and organic solvent invasion. The polyester membrane itself is self adhesive, and if associated with an appropriate heat and pressure, the polyester membrane is adhesive to a plurality of materials such as paper, PVC, copper, aluminum foil and iron. Therefore, as shown in Fig.1, the steps of conventional manufacturing method of a measuring tape formed with a polyester membrane thereon include:
1.laying out a whole roll of tape having an original metallic color;
2.attaching aluminum foils to both surfaces of the above mentioned tape;
3.printing scale marks on the aluminum foils attached to the surfaces of the tape;
4.forming a polyester membrane on each surface of the tape;
5.trimming, and removing burrs from both the aluminum foils and the polyester membranes;
6.returning the finished product of tape.

However, this conventional manufacturing method is too complicated because it requires the aid of a plurality of rollers, and has to go through with a tedious step of trimming, and removing burrs from the aluminum foils and process is intricate and the working time is prolonged. In addition, as bonding between the aluminum foil and the polyester membrane can not be perfect by allowing foam to exist therebetween, so that the product yield is reduced due to loosing surface flatness. Such a disadvantageous result is the most notorious defect that manufactures eagerly want to avert. Furthermore, the aluminum foil is used for enhancing the bonding force of the polyester membrane with the tape, but the visibility of scale marks printed on the grey aluminum foil is greatly influenced by the glare and shade made by incident light, and it causes the user of the tape difficult to read the numerals of the scale.

In order to eliminate the disadvantages and inconvenience inherent to the conventional technique mentioned above, the inventor of the present invention has carried out researches and trials for a long time concerning this matter, and succeeded in providing the present invention which is mow to be divulged hereinafter.

### SUMMARY OF THE INVENTION

It is an object of the present invention to provide structure of a measuring tape covered with a polyester membrane thereon and the manufacturing method thereof having an excellent anti-abrasive property, and the polyester membrane is kept flatly and smoothly adhering to each tape surface so as to ensure improved tape durability.

It is another object of the present invention to provide the structure of the above mentioned measuring tape and the manufacturaing method thereof which is painted with a colored primer on each tape surface for the user of the tape to read scale marks thereon conveniently.

It is still another object of the present invention to provide the structure of the above mentioned measuring tape and the manufacturing method thereof which can be manufactured simply and efficiently to shorten production time.

To achieve these and other objects, gist of the present invention is directed to provide the manufacturing method in which including the steps of:
1.applying a primer on both surfaces of a tape having an original metallic color;
2.printing scale marks on both tape surfaces with a printing roller after painting the primer, then irradiating the tape with a light ray and drying it;
3.forming a glue containing polyester membrane on each tape surface by pressing with a pair of temperature rollers at a constant temperature of 150°C ;
4.returning the finished product of tape around the recoiling reel.

The whole roll of a tape is laid out and returned by incorporated operation of a sending reel and a recoiling reel. Between the above mentioned two reels there is a scale mark printing roller for printing the scale marks on the tape surfaces, and a pair of temperature rollers including an upper roller and a lower roller used for pressing glue containing polyester membranes delivered from an upper and a lower rolls on corresponding upper and lower tape surfaces firmly bonded such that foam can not exist therebetween. The tape surface is therefore maintained in smooth and flat state.

The surface of the upper roller is formed into an annular groove whose width being equal to that of the tape, whereas the width of the lower roller is smaller than that of the tape so that the step of trimming the tape edges and removing burrs can be performed simultaneously during proceeding the step of forming the polyester membrane on the tape. The structure of a finished tape comprises a tape with a primer and a polyester membrane formed on each tape surface.

### BRIEF DESCRIPTION OF THE DRAWINGS

The drawings disclose an illustrative embodiments of the present invention which serves to exemplify various advantages and objects hereof, and are as follow:
Fig. 1 is an approximate block diagram showing the steps of forming polyester membrane on a tape surface in a conventional technique;
Fig. 2 is an approximate block diagram showing the steps of forming polyester membrane on tape surface of the present invention;
Fig. 3 is a schematic layout of the components of apparatus used for the present invention;

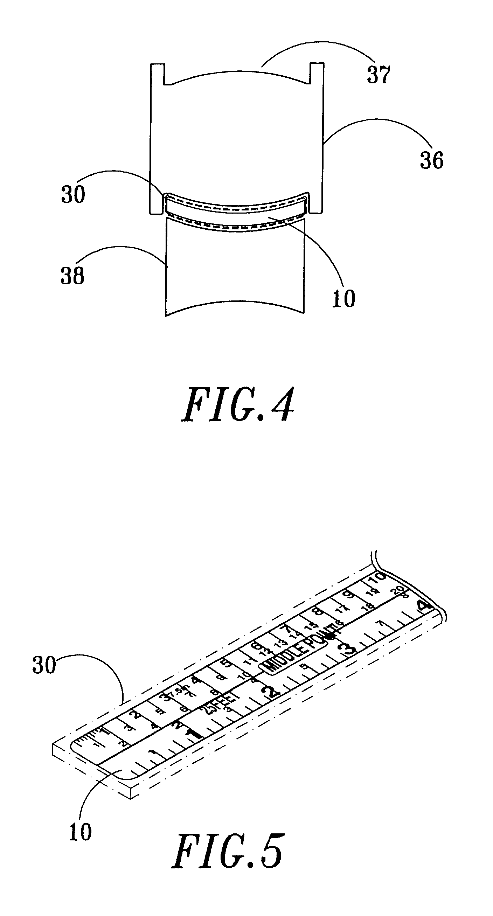

Fig. 4 is an illustrative drawing showing the state of a pair of temperature rollers pressing the polyester membrane on a tape according to the present invention;
Fig. 5 is a drawing of a finished product of a tape according to the present invention.

### DETAILED DESCRIPTION OF THE PREFERRED EMBODIMENT

Hereinafter, the best mode for carrying out the present invention will be described more fully below with reference to attached drawing:

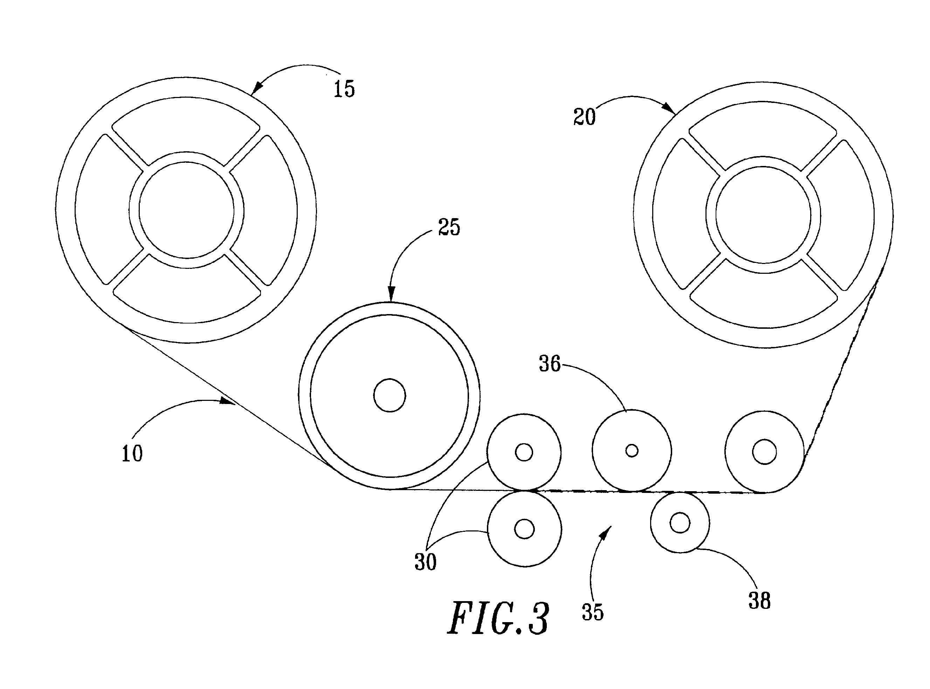

Referring to Fig.3 first, a whole roll of tape is applied a primer on both surfaces of a tape and the tape now becomes a colored tape 10. Then it is wound around a sending reel 15 which rotates associated with rotation of a returning reel 20 to recoil the finished product of tape. Next, the step of printing scale marks on the tape surfaces is carried out with a printing roller 25, then irradiating the tape 10 with a light ray and drying it. Then, a pair of rolled glue containing polyester membranes 30 are bonded firmly on the tape surfaces by pressing with a pair of temperature rollers 35 which is composed of an upper roller 36 and a lower roller 38 at a constant temperature of 150°C so that there are no foam produced between the tape surface and membrane. Finally, the finished product of tape 10 is returned to the recoiling reel 20.

Accordingly, as shown in the block diagram of Fig.2, the manufacturing method of the present invention comprises the steps of:
1.applying a primer on both surfaces of a tape having an original metallic color;
2.printing scale marks on both tape surfaces with the printing r oller after painting the primer, then irradiating the tape with a light and drying it;
3.forming a glue containing polyester membrane on each tape surface by pressing with a pair of temperature rollers at a constant temperature of 150°C ;
4.retruning the finished product of tape around the recoiling reel.

Comparing the above manufacturing process of the present invention with that of cited conventional technique shown in the block diagram of fi.gl, step 5, trimming, and removing burrs form both the aluminum foil and the polyester membrane for the conventional technique is not required for the present invention thereby contributing to simplifying the manufacturing process.

Now the reson why the step 5 for conventional technique is not required for the present invention will be explained as follows. Referring to Figs, 4 and 5, the surface of the upper temperature roller 36 is formed into an annular groove 37 whose width being equal to that of the tape 10, whereas the width of the lower temperature roller 38 is a little bit smaller than that of the tape 10 so that the step of trimming the tape edges and removing burrs can be preformed simultaneously during proceeding the step of forming the polyester membrane 30 on the tape 10.

Besides, it is beneficial to select a primer whose color well matches that of the scale marks on the tape. For example, the combination of a yellow primer with black scale marks may result in exhibiting a strong contrast which facilitates the user of the tape rule to read the scale correctly and quickly.

In all, the structure of the tape made according to the present invention comprises a tape with a primer and a polyester membrane formed on each tape surface. The tape made according to the present invention exhibits advantages which the tape made of a conventional technique can not cope with, those advantages are: flat and smooth tape surface, excellent anti-abrasive property and improved durability, good color matching between the primer and the scale marks thereby facilitating reading scale, and easily manufacturable with improved production efficiency and reduced product cost.

Many changes and modifications in the above described embodiment of the invention can, of course, be carried out without departing from the scope thereof. Accordingly to promote the progress in science and the useful arts, the invention is disclosed and is intended to be limited only by the scope of the appended claims.

## Claims

1. A manufacturing method for structure of a measuring tape covered with polyester membrane thereon comprising the steps of:
(1)applying a primer on each surface opf a tape having an original metallic color;
(2)printing scale marks on both tape surfaces with a printing roller after printing the primer, then irradiating the tape with a light ray and drying it;
(3)forming a glue containing polyester membrane on each tape surface by pressing with a pair of temperature rollers;
(4)returning the finished product of tape around a recoiling reel.

2. The manufacturing method as claimed in claim 1, wherein said pair of temperature rollers are kept at a constant temperature of 150°C.

3. The manufacturing method as claimed in claim 1, wherein the surface of the upper roller of said pair of temperature rollers is formed into an annular groove.

4. The manufacturing method as claimed in claim 3, wherein the width of said annular groove formed on the surface of said upper roller is equal to that of said tape.

5. The manufacturing method as claimed in claim 1, wherein the thickness of said polyester membrane is 15µm.

6. The manufacturing method as claimed in claim 1, wherein said polyester membrane is applied to both surfaces of said tape.

7. The manufacturing method as claimed in claim 1, wherein said polyester membrane is adhered to the surface of said tape by means of thermal pressing force exerted by said pair of temperature rollers.

8. Structure of a measuring tape covered with polyester membrane comprising:
a thin measuring tape;
a primer formed on each tape surface; and
a polyester membrane formed on each tape surface,
both surfaces of said tape are brilliantly colored by coating with said primer thereon, then scale marks are printed further thereon, finally a polyester membrane is formed on each tape surface so as to offer said tape an anti-abrasive property and also ensure durability of sad scale marks on said tape without exfoliating.

9. The structure of a measuring tape as claimed in claim 8, wherein the thickness of said polyester membrane is 15µm.

10. The structure of a measuring tape as claimed in claim 8, wherein said polyester membrane is applied to both surfaces of said tape.

11. The structure of a measuring tape as claimed in claim 8, wherein the color of said primer is yellow.
